# EUROPÄISCHE PATENTSCHRIFT

(11) **EP 0 364 750 B1**
(45) Veröffentlichungstag und Bekanntmachung des Hinweises auf die Patenterteilung: **07.07.1993**
(21) Anmeldenummer: 89117359.3
(22) Anmeldetag: 20.09.1989
(51) Int. Cl.: B65G 59/02

(54) **Einrichtung zum Entstapeln von Paletten**
Depalletizer
Dépalettiseur

(30) Priorität: 15.10.1988 DE 3835268
(43) Veröffentlichungstag der Anmeldung: 25.04.1990
(73) Patentinhaber: OSTMA Maschinenbau GmbH, 53909 Zülpich (DE)
(72) Erfinder: Odenthal, Heinz F., D-5352 Zülpich 16 (DE)
(74) Vertreter: Andrejewski, Walter

(56) Entgegenhaltungen:
- DD-A- 207 527
- US-A- 3 967 737

## Beschreibung

Die Erfindung betrifft eine Einrichtung zum Entstapeln von Paletten, die einen Stapel aus stapelfähigen Elementen, insbesondere einen Papierstapel aufweisen, - mit einem Zuführförderer für die Zuführung von bestapelten Paletten zu einer Entstapelstation, einer Entstapelstation mit vorgegebenem Entstapelniveau sowie Entstapeltisch, der nacheinander die zu entstapelnden Paletten aufnimmt, und einem Abführförderer für die entstapelten Paletten, wobei der Entstapeltisch heb- und senkbar ausgebildet ist und mit dem jeweils obersten Element des beim Entstapeln niedriger werdenden Stapels auf das Entstapelniveau einrichtbar ist. Das Entstapelniveau ist z.B. das Niveau einer nachgeschalteten, mit den einzelnen Elementen des Stapels zu beschickenden Maschine. Die Entstapelung erfolgt automatisch mit entsprechenden Hilfseinrichtungen, z.B. Sauggreifern, oder von Hand.

Bei einer bekannten Einrichtung (DD-PS 207 527), von der die Erfindung ausgeht, befindet sich in der Entstapelstation lediglich der Entstapeltisch. Er bewegt sich zwischen einem tiefsten Tischniveau und einem höchsten Tischniveau taktweise nach Maßgabe der Höhe des Stapels und der Entstapelung der Palette auf und nieder und kann eine Zwischenstellung einnehmen, in der er mit dem Zuführförderer sowie mit dem auf gleichem Niveau befindlichen Abführförderer niveaugleich ist. In dieser Stellung kann eine abgestapelte Palette dem Abführförderer zugeführt und gleichzeitig kann eine bestapelte Palette von dem Zuführförderer an den Entstapeltisch übergeben werden. Erhebliche Totzeiten entstehen, weil zur Durchführung dieser Operation der Entstapeltisch zunächst aus seiner obersten Stellung, in der das letzte Element des Stapels auf Entstapelniveau abgegeben wurde, in die Zwischenstellung überführt werden muß, wo eine neue bestapelte Palette aufgenommen werden und die entleerte Palette abgegeben wird, um danach mit der bestapelten Palette in seine tiefste Stellung bewegt zu werden, in der sich das oberste Element des Stapels auf dem Entstapelniveau befindet.

Bei einer anderen Ausführung (US-PS 39 67 737) wird die entstapelte Palette während der Abwärtsbewegung des Entstapeltisches von diesem abgenommen und aus der Bewegungsbahn des Entstapeltisches gebracht, so daß eine neue Palette mit einem Stapel auf den Entstapeltisch gesetzt werden kann, unmittelbar nachdem dieser seine unterste Position erreicht hat.

Der Erfindung liegt die Aufgabe zugrunde, eine Einrichtung des beschriebenen Aufbaus so weiter auszubilden, daß die Totzeit, die für die beschriebenen Übergaben bei der bekannten Einrichtung erforderlich ist, wesentlich reduziert wird.

Zur Lösung dieser Aufgabe lehrt die Erfindung, daß zwischen Zuführförderer und Entstapeltisch in der Entstapelstation ein heb- und senkbarer Vorschalttisch angeordnet ist, der während der Entstapelung einer auf dem Entstapeltisch befindlichen Palette mit einer bestapelten Palette beschickbar sowie mit seinem Tischniveau auf dasjenige Tischniveau des Entstapeltisches einrichtbar ist, welches dieser bei Beginn der Entstapelung einer Palette aufnehmen muß, und daß vor dem Überführen oder beim Überführen der bestapelten Palette von dem Vorschalttisch auf den Entstapeltisch die entstapelte Palette von diesem abführbar ist. Eine bevorzugte Ausführungsform der Erfindung ist weitergehend dadurch gekennzeichnet, daß zwischen Entstapeltisch und Abführförderer in der Entstapelstation ein heb- und senkbarer Nachschalttisch angeordnet ist, dem beim Abführen der bestapelten Palette auf den Entstapeltisch die abzuführende entstapelte Palette übergebbar ist.

Die Erfindung geht von der Erkenntnis aus, daß die bei den bekannten Maßnahmen störenden Totzeiten beachtlich reduziert werden, wenn der Entstapeltisch bei der Aufnahme einer bestapelten Palette bereits die tiefste Stellung aufweist, bei der sich das erste abzunehmende Element des Stapels auf Entstapelniveau befindet, und daß dieses erreichbar ist , wenn in der beschriebenen Weise ein Vorschalttisch vorgesehen ist und funktioniert. Zu einer Optimierung kommt man, wenn in der beschriebenen Weise zusätzlich ein Nachschalttisch integriert ist.

Im einzelnen bestehen im Rahmen der Erfindung mehrere Möglichkeiten der weiteren Ausbildung und Gestaltung. Anschließend an diejenige Ausführungsform der erfindungsgemäßen Einrichtung, bei der zwar ein Vorschalttisch, ein Nachschalttisch jedoch nicht angeordnet ist, empfiehlt die Erfindung, daß der Abführförderer auf dem Tischniveau angeordnet ist, welches der Entstapeltisch in tiefster Stellung mit der entstapelten Palette einnimmt, und daß der Vorschalttisch bei der Übergabe einer bestapelten Palette auf den Entstapeltisch ebenfalls auf diesem Tischniveau angeordnet ist. Ist zusätzlich ein Abführförderer vorgesehen, so ist eine bevorzugte Ausführungsform der Erfindung dadurch gekennzeichnet, daß der Abführförderer auf dem Niveau des Zuführförderers angeordnet ist, daß die Übergabe einer bestapelten Palette von dem Vorschalttisch auf den Entstapeltisch sowie die Übergabe der jeweils entstapelten Palette von dem Entstapeltisch auf den Nachschalttisch auf dem Tischniveau erfolgt, welches der Entstapeltisch in tiefster Stellung einnimmt, und daß danach der Nachschalttisch auf dem Niveau des Abführförderers die entstapelte Palette auf den Abführförderer überführt. In allen Fällen empfiehlt es sich, die Anordnung und Auslegung so zu treffen, daß der Vorschalttisch, der Nachschalttisch und der Entstapeltisch Rollgänge für die durchzuführenden Bewegungen der bestapelten bzw. entstapelten Paletten aufweisen und daß zumindest der Zuführförderer, der Abführförderer und die heb- und senkbaren Tische motorisch angetrieben und automatisch gesteuert sind. Das läßt sich mit den Hilfsmitteln der modernen Antriebs- und Steuerungstechnik unschwer verwirklichen, und zwar auch in bezug auf einen eventuellen Antrieb der Rollgänge. Die für die Durchführung der beschriebenen Bewegungen der bestapelten bzw. entstapelten Paletten erforderliche Kinematik und die zuzuordnenden Zeiten lassen sich ohne weiteres in üblichen Diagrammen fixieren, auf die die Steuerung zu adaptieren ist.

Die erfindungsgemäßen Maßnahmen wurden als Einrichtung zum Entstapeln von Paletten beschrieben. In den Rahmen der Erfindung fällt auch die kinematische Umkehr, bei der die beschriebenen Maßnahmen verwirklicht werden, jedoch mit der Maßgabe, daß ein Bestapeln der Paletten erfolgt, die Entstapelstation also zur Bestapelstation umgerüstet ist, und bei der entstapelte Paletten zugeführt und bestapelte Paletten abgeführt werden.

Im folgenden wird die Erfindung anhand einer lediglich ein Ausführungsbeispiel darstellenden Zeichnung ausführlicher erläutert. Es zeigen
- Fig. 1: das Schema einer erfindungsgemäßen Einrichtung in Seitenansicht bei der Entstapelung einer bestapelten Palette, und
- Fig. 2: den Gegenstand nach Fig. 1 in einer anderen Funktionsstellung.

Die in den Figuren dargestellte Einrichtung dient zum Entstapeln von Paletten 1, die einen Stapel 2 aus stapelfähigen Elementen, insbesondere einen Papierstapel, aufweisen. Zum grundsätzlichen Aufbau der Erfindung gehören
ein Zuführförderer 3 für die Zuführung von bestapelten Paletten 1, 2 zu einer Entstapelstation 4,
eine Entstapelstation 4 mit vorgegebenem Entstapelniveau E sowie Entstapeltisch 5, der nacheinander die zu entstapelnden Paletten 1, 2 aufnimmt, und
ein Abführförderer 6 für die entstapelten Paletten 1.

Der Entstapeltisch 5 ist heb- und senkbar ausgebildet und mit dem jeweils obersten Element 7 des beim Entstapeln niedriger werdenden Stapels 2 auf das Entstapelniveau E einrichtbar. Dieses mag dem Beschickniveau einer angeordneten und nicht gezeichneten Maschine entsprechen.

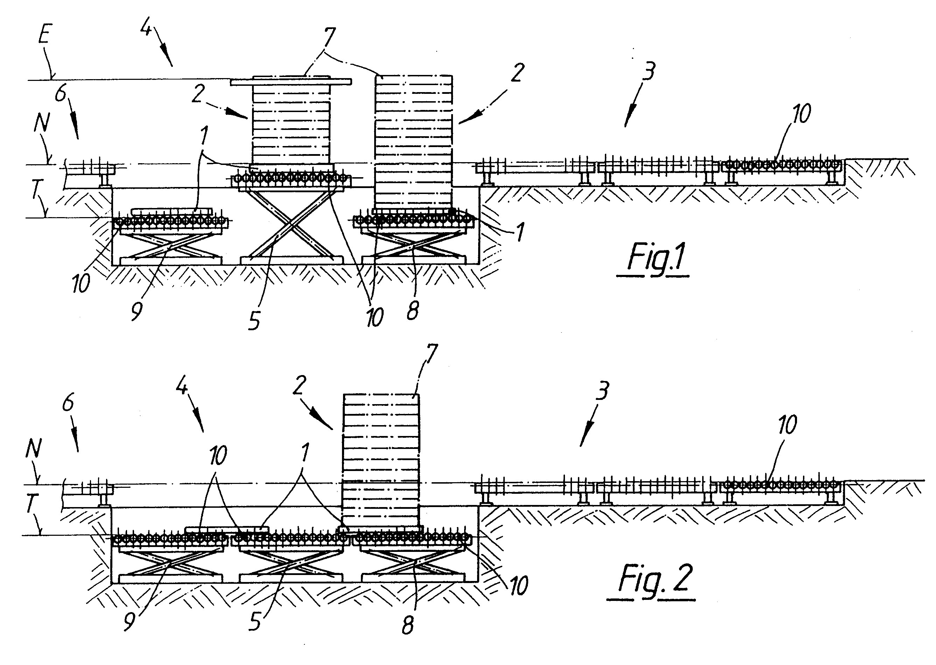

Die Anordnung ist so getroffen, daß zwischen Zuführförderer 3 und Entstapeltisch 5 in der Entstapelstation 4 ein heb- und senkbarer Vorschalttisch 8 angeordnet ist. Dieser ist während der Entstapelung einer auf dem Entstapeltisch 5 befindlichen Palette 1, 2 mit einer bestapelten Palette 1, 2 beschickbar und in Fig. 1 mit einer solchen bereits beschickt. Dieser ist fernerhin mit seinem Tischniveau T auf dasjenige Tischniveau T des Entstapeltisches 5 einrichtbar, welches dieser bei Beginn der Entstapelung einer Palette 1, 2 einnehmen muß. Insoweit wird auf die Fig. 2 verwiesen. Die Anordnung ist im übrigen so getroffen, daß vor dem Überführen oder beim Überführen der bestapelten Palette 1, 2 von dem Vorschalttisch 8 auf den Entstapeltisch 5 die entstapelte Palette 1 von diesem abführbar ist. Das kann auf verschiedene Weise erfolgen. Im Ausführungsbeispiel und nach bevorzugter Ausführungsform der Erfindung befindet sich dazu zwischen Entstapeltisch 5 und Abführförderer 6 in der Entstapelstation 4 ein heb- und senkbarer Nachschalttisch 9, dem beim Abführen der bestapelten Palette 1, 2 auf den Entstapeltisch 5 die abzuführende entstapelte Palette 1 übergebbar ist, wie es die Fig. 2 andeutet. Dabei ist der Abführförderer 6 auf dem Niveau N des Zuführförderers 3 angeordnet. Die Übergabe einer bestapelten Palette 1, 2 von dem Vorschalttisch 8 auf den Entstapeltisch 5 sowie die Übergabe der jeweils entstapelten Palette 1 von dem Entstapeltisch 5 auf den Nachschalttisch 9 erfolgen auf dem Tischniveau T, welches der Entstapeltisch 5 in seiner tiefsten Stellung einnimmt, bei der das oberste Element 7 im Stapel 2 sich auf Entstapelniveau E befindet. Hat die Übergabe stattgefunden, so bewegt sich der Nachschalttisch 9 auf das Niveau N des Abführförderers 6 und die entstapelte Palette 1 wird auf den Abführförderer 6 überführt. Der Vorschalttisch 8, der Nachschalttisch 9 und der Entstapeltisch 5 besitzen Rollgänge 10 für die durchzuführenden Bewegungen der bestapelten bzw. der entstapelten Palette 1, 2. Zumindest der Zuführförderer 3 und der Abführförderer 6 sowie die heb- und senkbaren Tische 5, 8, 9 sind motorisch angetrieben und automatisch steuerbar.

Aus einer vergleichenden Betrachtung der Fig. 1 und 2 ergibt sich, daß der Nachschalttisch 9 auch fehlen könnte. Man kommt nichtsdestoweniger zu günstigen Taktzeiten, wenn dabei der Abführförderer 6 auf dem Tischniveau T angeordnet ist, welches der Entstapelstation 5 in tiefster Stellung mit der jeweils entstapelten Palette 1 einnimmt, wobei der Vorschalttisch 8 bei der Übergabe einer bestapelten Palette 1, 2 zu dem Entstapeltisch 5 ebenfalls auf diesem Tischniveau T angeordnet ist.

## Patentansprüche

1. Einrichtung zum Entstapeln von Paletten (1), die einen Stapel (2) aus stapelfähigen Elementen, insbesondere einen Papierstapel, aufweisen, - mit,
einem Zuführförderer (3) für die Zuführung von bestapelten Paletten (1, 2) zu einer Entstapelstation (4),
einer Entstapelstation (4) mit vorgegebenem Entstapelniveau (E) sowie Entstapeltisch (5), der nacheinander die zu entstapelnden Paletten (1, 2) aufnimmt, und
einem Abführförderer (6) für die entstapelten Paletten (1),
wobei der Entstapeltisch (5) heb- und senkbar ausgebildet ist und mit dem jeweils obersten Element des beim Entstapeln niedriger werdenden Stapels (2) auf das Entstapelniveau (E) einrichtbar ist, **dadurch gekennzeichnet,** daß zwischen dem Zuführförderer (3) und dem Entstapeltisch (5) in der Entstapelstation (4) ein heb- und senkbarer Vorschalttisch (8) angeordnet ist, der während der Entstapelung einer auf dem Entstapeltisch (5) befindlichen Palette (1, 2) mit einer bestapelten Palette (1, 2) beschickbar sowie mit seinem Tischniveau (T) auf dasjenige Tischniveau (T) des Entstapeltisches (5) einrichtbar ist, welches dieser bei Beginn der Entstapelung einer Palette (1, 2) einnehmen muß, und daß vor dem Überführen oder beim Überführen der bestapelten Palette (1, 2) von dem Vorschalttisch (8) auf den Entstapeltisch (5) die entstapelte Palette (1) von diesem abführbar ist.

2. Einrichtung nach Anspruch 1, dadurch gekennzeichnet, daß zwischen Entstapeltisch (5) und Abführförderer (6) in der Entstapelstation (4) ein heb- und senkbarer Nachschalttisch (9) angeordnet ist, dem beim Abführen der bestapelten Palette (1, 2) auf den Entstapeltisch (5) die abzuführende entstapelte Palette (1) übergebbar ist.

3. Einrichtung nach Anspruch 1, dadurch gekennzeichnet, daß der Abführförderer (6) auf dem Tischniveau (T) angeordnet ist, welches der Entstapeltisch (5) in tiefster Stellung mit der entstapelten Palette (1) einnimmt, und daß der Vorschalttisch (8) bei der Übergabe einer bestapelten Palette (1, 2) auf den Entstapeltisch (5) ebenfalls auf diesem Tischniveau (T) angeordnet ist.

4. Einrichtung nach Anspruch 2, dadurch gekennzeichnet, daß der Abführförderer (6) auf dem Niveau (N) des Zuführförderers (3) angeordnet ist, daß die Übergabe einer bestapelten Palette (1, 2) von dem Vorschalttisch (8) auf den Entstapeltisch (5) sowie die Übergabe der jeweils entstapelten Palette (1) von dem Entstapeltisch (5) auf den Nachschalttisch (9) auf dem Tischniveau (T) erfolgt, welches der Entstapeltisch (5) in tiefster Stellung einnimmt, und daß danach der Nachschalttisch (9) auf dem Niveau (N) des Abführförderers (6) die entstapelte Palette (1) auf den Abführförderer (6) überführt.

5. Einrichtung nach einem der Ansprüche 1 bis 4, dadurch gekennzeichnet, daß der Vorschalttisch (8), der Nachschalttisch (9) und der Entstapeltisch (5) Rollgänge (10) für die durchzuführenden Bewegungen der bestapelten bzw. entstapelten Paletten (1, 2) aufweisen und daß zumindest der Zuführförderer (3), der Abführförderer (6) und die heb-und senkbaren Tische (5, 8, 9) motorisch angetrieben und automatisch gesteuert sind.

## Claims

1. A device for unstacking pallets (1) which comprise a stack (2) of stackable elements, particularly a stack of paper, - with
a feeder conveyor (3) for feeding stacked pallets (1, 2) to an unstacking station (4),
an unstacking station (4) with a predetermined unstacking level (E) and an unstacking platform (5) which receives the pallets (1, 2) to be unstacked, in succession, and
a discharge conveyor (6) for the unstacked pallets (1),
wherein the unstacking platform (5) is constructed so that it can be raised and lowered and can be set with the element which is uppermost each time of the stack (2) which is becoming lower during unstacking, at the unstacking level (E), characterised in that an upstream platform (8), which can be raised and lowered, is disposed between the feeder conveyor (3) and the unstacking platform (5) in the unstacking station (4), which upstream platform can be loaded with a stacked pallet (1, 2) during the unstacking of a pallet (1, 2) situated on the unstacking platform (5), and which can be set with its platform level (T) at that level (T) of the unstacking platform (5) which the latter has to adopt at the commencement of the unstacking of a pallet (1, 2), and that before the transfer or during the transfer of the stacked pallet (1, 2) from the upstream platform (8) on to the unstacking platform (5) the unstacked pallet (1) can be discharged from the latter.

2. A device according to claim 1, characterised in that a downstream platform (9), which can be raised and lowered, is disposed between the unstacking platform (5) and the discharge conveyor (6) in the unstacking station (4), to which downstream platform the unstacked pallet (1), which is to be discharged when the stacked pallet (1, 2) is discharged on to the unstacking platform (5), can be transferred.

3. A device according to claim 1, characterised in that the discharge conveyor (6) is disposed at the platform level (T) which the unstacking platform (5) adopts in its lowest position with the unstacked pallet (1), and that the upstream platform (8) is also disposed at this platform level (T) during the transfer of a stacked pallet (1, 2) to the unstacking platform (5).

4. A device according to claim 2, characterised in that the discharge conveyor (6) is disposed at the level (N) of the feeder conveyor (3), that the transfer of a stacked pallet (1, 2) from the upstream platform (8) to the unstacking platform (5) and the transfer of each unstacked pallet (1) from the unstacking platform (5) to the downstream platform (9) is effected at the platform level (T) which the unstacking platform (5) adopts in its lowest position, and that the downstream platform (9) thereafter transfers the unstacked pallet (1) on to the discharge conveyor (6) at the level (N) of the discharge conveyor (6).

5. A device according to any one of claims 1 to 4, characterised in that the upstream platform (8), the downstream platform (9) and the unstacking platform (5) have roller tables (10) for the movements of the stacked or unstacked pallets (1, 2) which are to be executed, and that at least the feeder conveyor (3), the discharge conveyor (6) and the raisable and lowerable platforms (5, 8, 9) are motor-driven and automatically controlled.

## Revendications

1. Dispositif de désempilage de palettes (1), qui comporte une pile (2) d'éléments empilables, notamment une pile de papier, -
comportant un convoyeur d'amenée (3) servant à amener des palettes empilées (1,2) à un poste de désempilage (4),
un poste de désempilage (4) comportant un niveau prédéterminé de désempilage (E) ainsi qu'une table de désempilage (5), qui reçoit successivement les palettes à désempiler (1,2), et
un convoyeur d'évacuation (6) pour les palettes désempilées (1),
et dans lequel la table de désempilage (5) est agencée de manière à pouvoir être soulevée et abaissée et peut être alignée sur l'élément respectivement le plus élevé de la pile (2), dont la hauteur diminue lors du désempilage, au niveau de désempilage (E), caractérisé en ce qu'entre le convoyeur d'amenée (3) et la table de désempilage (5) est disposée, dans le poste de désempilage (4), une table amont (8) pouvant être soulevée et abaissée, et qui, pendant le désempilage d'une palette (1,2) située sur la table de désempilage (5), peut être chargée par une palette désempilée (1,2) et peut être alignée, par son niveau (T), sur le niveau (T) de la table de désempilage (5), que doit prendre cette table au début du désempilage d'une palette (1,2), et qu'avant ou pendant le transfert de la palette empilée (1,2) de la table amont (8) à la table de désempilage (5), la palette désempilée (1) peut être évacuée de cette table.

2. Dispositif selon la revendication 1, caractérisé en ce qu'entre la table de désempilage (5) et le convoyeur d'évacuation (6) est disposée, dans le poste de désempilage (4), une table aval (9) pouvant être soulevée et abaissée et à laquelle la palette désempilée (1), qui est évacuée, peut être transférée lors de l'évacuation de la palette empilée (1,2) sur la table de désempilage (5).

3. Dispositif selon la revendication 1, caractérisé en ce que le convoyeur d'évacuation (6) est disposé au niveau (T), que prend la table de désempilage (5) dans sa position la plus basse, alors que la palette (1) est désempilée, et que lors du transfert d'une palette empilée (1,2) sur la table de désempilage (5), la table amont (8) est également disposée à ce niveau (T).

4. Dispositif selon la revendication 2, caractérisé en ce que le convoyeur d'évacuation (6) est disposé au niveau (N) du convoyeur d'amenée (3), que le transfert d'une palette empilée (1,2) depuis la table amont (8) à la table de désempilage (5) ainsi que le transfert de la palette respectivement désempilée (1) depuis la table de désempilage (5) à la table aval (9) s'effectuent au niveau (T), que prend la table de désempilage (5) dans sa position la plus basse, et qu'ensuite la table aval (9) située au niveau (N) du convoyeur d'évacuation (6) transfère la palette désempilée (1) sur le convoyeur d'évacuation (6).

5. Dispositif selon l'une des revendications 1 à 4, caractérisé en ce que la table amont (8), la table aval (9) et la table de désempilage (5) possèdent des tables à rouleaux (10) pour les déplacements, qui doivent être exécutés, des palettes empilées ou désempilées (1,2) et qu'au moins le convoyeur d'amenée (3), le convoyeur d'évacuation (6) et les tables (5,8,9) pouvant être soulevées et abaissées sont entraînées par un moteur et commandées de façon automatique.
